(19) Europäisches Patentamt
European Patent Office
Office européen des brevets

(11) **EP 2 419 295 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(21) Anmeldenummer: **10713620.2**

(22) Anmeldetag: **07.04.2010**

(51) Int Cl.:
**B60L 7/06** *(2006.01)*   **B60L 7/10** *(2006.01)*
**B60L 7/14** *(2006.01)*   **B60L 7/16** *(2006.01)*
**H02M 5/45** *(2006.01)*   **H02P 3/22** *(2006.01)*
**H02P 23/06** *(2006.01)*   **B60L 9/28** *(2006.01)*
**B63H 23/24** *(2006.01)*   **H02M 5/451** *(2006.01)*

(86) Internationale Anmeldenummer:
**PCT/EP2010/054568**

(87) Internationale Veröffentlichungsnummer:
**WO 2010/118975 (21.10.2010 Gazette 2010/42)**

(54) **ANTRIEBSSYSTEM FÜR EINE ANLAGE MIT EINEM WECHSELSPANNUNGSINSELNETZ**

DRIVE SYSTEM FOR A STAND-ALONE AC POWER PLANT

SYSTÈME D'ENTRAÎNEMENT POUR UN CENTRALE ÉLECTRIQUE AUTONOME À COURANT ALTERNATIF

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.04.2009 DE 102009017023**

(43) Veröffentlichungstag der Anmeldung:
**22.02.2012 Patentblatt 2012/08**

(73) Patentinhaber: **Siemens Aktiengesellschaft**
**80333 München (DE)**

(72) Erfinder:
• **VOGEL, Reinhard**
**91074 Herzogenaurach (DE)**
• **HARTWIG, Bernd**
**91054 Erlangen (DE)**

(56) Entgegenhaltungen:
**DE-A1- 2 237 233    DE-A1- 3 304 207**
**DE-A1- 3 409 631    DE-A1- 10 011 601**
**DE-A1- 19 944 244**

**Beschreibung**

Die Erfindung betrifft ein Antriebssystem für eine Anlage mit einem Wechselspannungsinselnetz, insbesondere für ein Schiff oder eine Offshore-Plattform, gemäß Oberbegriff des Patentanspruchs 1.

Der Umrichter mit Gleichstromzwischenkreis (auch als "Load Commutated Inverter" (LCI) bezeichnet) ist eine vergleichsweise einfache, vielfach eingesetzte Umrichterschaltung für Antriebssysteme. Ein solcher Umrichter umfasst einen netzseitigen Stromrichter und einen maschinenseitigen Stromrichter, wobei der netzseitige Stromrichter eingangsseitig mit einem Wechselspannungsnetz und ausgangsseitig mit dem Gleichstromzwischenkreis und der motorseitige Stromrichter eingangsseitig mit dem Gleichstromzwischenkreis und ausgangsseitig mit einer Drehstromantriebsmaschine verbunden sind. In den Gleichstromzwischenkreis ist üblicherweise eine Drossel geschaltet, die als Energiespeicher für den Zwischenkreisstrom dient, so dass möglichst ein ideal geglätteter, konstanter Zwischenkreisstrom fließt.

Ein derartiger Umrichter wird sehr häufig für Antriebe mit Synchronmaschinen großer Leistungen verwendet und bietet eine vergleichweise einfache Möglichkeit zum IV-Quadrantenbetrieb (d.h. motorischen und generatorischen Betrieb) der Drehstromantriebsmaschine in beiden Drehrichtungen.

Im motorischen Betrieb (d.h. beim "Antreiben") nimmt die Drehstromantriebsmaschine über den Umrichter elektrische Energie aus dem Wechselspannungsnetz auf. Dabei arbeiten der netzseitige Stromrichter im Gleichrichterbetrieb und der maschinenseitige Stromrichter im Wechselrichterbetrieb.

Im generatorischen Betrieb (d.h. beim "Bremsen") erzeugt die Drehstromantriebsmaschine elektrische Energie und gibt sie über den Umrichter an das Wechselspannungsnetz ab. Dabei arbeiten der netzseitige Stromrichter im Wechselrichterbetrieb und der maschinenseitige Stromrichter im Gleichrichterbetrieb.

Der Umrichter mit Gleichstromzwischenkreis wird, insbesondere in Kombination mit Synchronmaschinen, sehr häufig für elektrische Schiffsantriebe (Propulsions-Hauptantriebe) eingesetzt. Dies gilt vor allem bei großen Antriebsleistungen im einstelligen oder zweistelligen Megawattbereich.

Bei Schiffsantrieben ist insbesondere dann, wenn Propeller mit feststehenden Flügeln ("Festpropeller") eingesetzt werden, der generatorische Betrieb in den Quadranten IV bzw. II unverzichtbar, um den Propeller abbremsen und die Propellerdrehrichtung umkehren zu können. Grund dafür ist, dass das sich bewegende Schiff eine sog. "durchziehende Last" durch strömendes Wasser darstellt.

Bei Schiffsantrieben mit einem Umrichter mit einem Gleichstromzwischenkreis wird die beim generatorischen Betrieb frei werdende Energie normalerweise über den Umrichter ins Netz zurückgespeist. Bei einem Bremsvorgang eine Schiffes kann diese Energie im zwei- oder dreistelligen Megajoulebereich liegen, wobei die Bremszeit in der Regel im Bereich von ca. 10 bis 60 Sekunden liegt.

Für Schiffe, deren Bordnetz nur eine kleine sogenannte "Hotellast" hat, d.h. bei denen die elektrische Hauptantriebsanlage den bei weitem größten elektrischen Verbraucher darstellt, ist die Energierückspeisung ins Bordnetz oft nicht erwünscht und/oder nicht mit der erforderlichen Leistung möglich, denn in diesen Fällen würden durch die Energierückspeisung unerwünschte und/oder nicht zulässige Spannungs- und/oder Frequenzerhöhungen der Bordnetzspannung auftreten. Diese Probleme können grundsätzlich in Wechselspannungsinselnetzen auftreten, da gerade in Inselnetzen die Anzahl der elektrischen Verbraucher und somit die Aufnahmefähigkeit des Netzes für rückgespeiste Energie oft begrenzt ist.

Bei einer in der noch unveröffentlichten europäischen Patentanmeldung der Anmelderin mit dem amtlichen Anmeldeaktenzeichen Nr. 07022773.1 beschriebenen Lösung werden unerwünschte und/oder nicht zulässige Spannungs- und/oder Frequenzerhöhungen der Spannung eines Wechselspannungsnetzes eines Schiffes dadurch vermieden, dass die rückgespeiste Energie in einem Bremswiderstand in Wärme umgewandelt, der vorübergehend dem Netz zugeschaltet wird. Durch den Bremswiderstand wird somit ein zusätzlicher Verbraucher an das Bordnetz angeschlossen, die eigentliche Energierückspeisung ins Bordnetz aber selbst nicht verhindert. Jeweils mit Zu- und Abschalten des Bremswiderstands tritt hierbei eine sprungartige Änderung der Leistungsbilanz auf, wodurch hohe Anforderungen an die Dynamik der Generatorregelungen bestehen.

Für Antriebssysteme mit einem Umrichter mit einem Gleichspannungszwischenkreis statt mit einem Gleichstromzwischenkreis sind bereits Schaltungen mit einem Bremswiderstand bekannt, der im Gleichspannungszwischenkreis angeordnet ist. In der Regel wird eine solche Lösung dann eingesetzt, wenn der netzseitige Stromrichter als Gleichrichter mit Dioden ausgeführt ist, so dass keine Energierückspeisung ins Wechselspannungsnetz erfolgen kann. Derartige Lösungen können aber aufgrund der wesentlichen funktionalen Unterschiede zwischen einem Gleichspannungszwischenkreis und einem Gleichstromzwischenkreis nicht ohne weiteres auf einen Umrichter mit einem Gleichstromzwischenkreis übertragen werden.

Aus der DE 749817 A ist ein Schiffantriebssystem bekannt, bei dem ein Drehstromantriebsmotor ohne einen zwischengeschalteten Umrichter direkt mit dem Netz verbunden ist. Der Motor wird dabei im generatorischen Betrieb mit Hilfe eines Umschalters galvanisch von dem Netz getrennt und mit Bremswiderständen verbunden.

Aus der DE 870 725 A ist ebenfalls ein Schiffantriebssystem bekannt, bei dem ein Drehstromantriebsmotor ohne einen zwischengeschalteten Umrichter direkt mit dem Netz verbunden ist. Es wird ein Motor mit mehreren, sich gegenseitig nicht beeinflussenden Drehstrom- und Erregerwicklungssystemen verwendet. Das zum Bremsen verwendete Drehstrom-Wicklungssystem ist im Motorbetrieb inaktiv, d.h. in ihm werden im Motorbetrieb keine Spannungen induziert. Zum Bremsen wird durch Einspeisung eines geeigneten Erregerstromes dann in diesem Drehstrom-Wicklungssystem eine Spannung induziert, so dass durch Bremswiderstände, die am betreffenden Drehstrom-Wicklungssystem angeschlossen sind, ein den Antrieb abbremsender Strom fließen kann.

Beide Lösungen beschreiben somit verschiedene Möglichkeiten zum Abbremsen von Drehstrom-Schiffsantriebsmotoren, die direkt am Wechselspannungsnetz betrieben werden. Sie sind somit nicht ohne weiteres auf Drehstromantriebe mit Umrichterspeisung, insbesondere solche mit Stromzwischenkreis, übertragbar.

DE 2 237 233 A1 offenbart eine Schaltungsanordnung für eine Drehfeldmaschine, die über einen Umrichter, der aus einem selbstgeführten, in beiden Energierichtungen betreibbaren Stromrichter, aus einem Gleichstromzwischenkreis mit Glättungsdrossel sowie aus einem netzgeführten Stromrichter besteht, an ein Drehstromnetz angeschlossen ist. Zum Abbremsen der Drehfeldmaschine ist bei Netzausfall in Reihe zur Glättungsdrossel ein steuerbarer ohmscher Bremswiderstand eingeschaltet, dessen zeitlicher Mittelwert durch Steuerimpulse so geführt ist, dass der zeitliche Mittelwert des über den steuerbaren Bremswiderstand fließenden Zwischenkreisstroms wenigstens annähernd konstant gehalten ist.

Ausgehend hiervon ist es Aufgabe vorliegender Erfindung, für ein Antriebssystem gemäß Oberbegriff des Patentanspruchs 1 eine Möglichkeit zu schaffen, mit der unerwünschte und/oder nicht zulässige Spannungs- und/oder Frequenzerhöhungen im Wechselspannungsinselnetz vermieden werden können.

Die Lösung dieser Aufgabe gelingt durch ein Antriebssystem mit den Merkmalen des Patentanspruchs 1. Vorteilhafte Ausgestaltungen sind jeweils Gegenstand der Unteransprüche.

Die Erfindung geht hierbei von der Überlegung aus, dass unerwünschte und/oder nicht zulässige Spannungs- und/oder Frequenzerhöhungen der Bordnetzspannung vermieden werden können, wenn schon die Energierückspeisung ins Wechselspannungsinselnetz selbst zumindest teilweise vermieden wird. Der netz- und der maschinenseitige Stromrichter lassen sich über ihre Steuerung und Regelung zwar so betreiben, dass keine Energie ins Netz zurück gespeist wird, die im Generatorbetrieb anfallende Energie (im Fall eines Schiffes die beim Abbremsen des Propellers physikalisch bedingt anfallende Bremsenergie) muss dann aber in anderer Weise abgebaut werden.

Erfindungsgemäß weist das Antriebssystem deshalb eine in dem Zwischenkreis angeordnete Energieaufnahmeeinrichtung auf, die zumindest einen Energieaufnehmer zur Aufnahme zumindest eines Teils der elektrischen Energie, die die Drehstromantriebsmaschine im generatorischen Betrieb erzeugt und über den motorseitigen Stromrichter an den Zwischenkreis abgibt, umfasst. Der Energieaufnehmer besteht bevorzugt aus zumindest einem ohmschen Widerstand, der die elektrische Energie in Wärme umwandelt. Es ist aber auch denkbar, die im generatorischen Betrieb erzeugte elektrische Energie in einem geeigneten Energiespeicher, z.B. in einem Hochleistungskondensator oder einem Schwungrad, zwischenzuspeichern und einer weiteren Verwendung in der Anlage zuzuführen. Sofern die Energieaufnahmeeinrichtung mehrere Energieaufnehmer umfasst, können diese beispielsweise zueinander parallel und/oder in Reihe geschaltet sein.

Die rückgespeiste Energie wird somit zumindest teilweise bereits im Zwischenkreis des Stromrichters aufgenommen, so dass sie erst gar nicht in das Netz gelangen kann. Die rückgespeiste Energie kann dabei vollständig in dem Zwischenkreis aufgenommen werden oder aber auch nur anteilsmäßig in Abhängigkeit von dem bei Generatorbetrieb situationsabhängig vorliegenden Energieaufnahmevermögen der an das Netz angeschlossenen Verbraucher.

Erfindungsgemäß ist der zumindest eine Energieaufnehmer durch die Energieaufnahmeeinrichtung zumindest in Abhängigkeit von der Polarität der Zwischenkreisspannung aktivierbar. Eine derartige Aktivierung kann beispielsweise in der Zuschaltung des Energieaufnehmers zu dem Zwischenkreis bestehen.

Hierbei liegt die Überlegung zugrunde, dass im motorischen Betrieb der Maschine für die im Gleichstrom-Zwischenkreis umgesetzte Leistung $P_Z$ allgemein gelten muss:

$$P_{Z,motorisch} = U_Z \bullet I_Z > 0 \quad . \qquad (Gl. \ 1)$$

Im generatorischen Betrieb muss somit für die Leistung $P_Z$ im Zwischenkreis allgemein gelten:

$$P_{Z,generatorisch} = U_Z \bullet I_Z < 0 \qquad (Gl. \ 2)$$

Das Hauptmerkmal eines Umrichters mit Gleichstromzwischenkreis liegt darin, dass sich die Stromrichtung des Zwischenkreisstroms $I_Z$ prinzipbedingt nicht umkehren kann. Unabhängig davon, ob motorischer oder generatorischer Betrieb vorliegt, ist das Vorzeichen des Stromes also unveränderlich (hier " +1 "); mathematisch ausgedrückt gilt

somit:

$$Sign\ \{I_{Z,motorisch}\} = Sign\ \{I_{Z,generatorisch}\} = konst. = +1 \qquad \textbf{(Gl. 3)}$$

Damit die Zwischenkreisleistung im generatorischen Betrieb negativ, d.h. kleiner Null werden kann (siehe G1. 2), muss sich somit die Polarität der Zwischenkreisspannung $U_Z$ für den generatorischen Betrieb umkehren:

$$\text{motorischer Betrieb:} \qquad Sign\ \{U_{Z,motorisch}\} \quad = +1 \quad \textbf{(Gl. 4)}$$

$$\text{generatorischer Betrieb:}\ Sign\ \{U_{Z,generatorisch}\} = -1 \quad \textbf{(Gl. 5)}$$

Die Polarität der Zwischenkreisspannung ist somit ein Indikator für die Betriebsart der Drehstromantriebsmaschine und kann gezielt dazu genutzt werden, um den Energieaufnehmer im generatorischen Betrieb zu aktivieren und im motorischen Betrieb zu deaktivieren.

Eine Aktivierung des Energieaufnehmers bei einer im generatorischen Betrieb vorliegenden Polarität der Zwischenkreisspannung ist dadurch besonders einfach möglich, dass die Energieaufnahmeeinrichtung eine in Reihe zu dem Energieaufnehmer geschaltet Diode umfasst, die derart gepolt ist, dass sie bei einer im generatorischen Betrieb vorliegenden Polarität der Zwischenkreisspannung leitend ist und bei einer im motorischen Betrieb vorliegenden Polarität der Zwischenkreisspannung sperrt. Bei mehreren in Reihe geschalteten Energieaufnehmern ist hierbei eine einzige in Reihe zu dieser Reihenschaltung geschaltete und somit für sämtliche Energieaufnehmer gemeinsame Diode ausreichend. Bei mehreren parallel geschalteten Energieaufnehmern kann eine zu dieser gesamten Parallelschaltung in Reihe geschaltete gemeinsame Diode ausreichend sein; es kann aber für jeden der Energieaufnehmer auch jeweils eine eigene Diode vorhanden sein.

Alternativ kann die Energieaufnahmeeinrichtung statt der Diode auch einen in Reihe zu dem Energieaufnehmer geschalteten steuerbaren leistungselektronischen Halbleiterschalter umfassen, der derart gepolt ist, dass er bei einer im generatorischen Betrieb vorliegenden Polarität der Zwischenkreisspannung in einen leitenden Zustand schaltbar ist und bei einer im motorischen Betrieb vorliegenden Polarität der Zwischenkreisspannung sperrt. Der Energieaufnehmer kann somit gezielt dem Zwischenkreis zugeschaltet werden, wodurch der Zeitpunkt und somit der Anteil der rückgespeisten Energie, der im Zwischenkreis aufgenommen wird bzw. der dem Netz zugeführt wird, aktiv gesteuert werden kann. Der leistungselektronische Halbleiterschalter ist hierzu bevorzugt als ein rückwärtssperrendes Leistungs-Halbleiterbauelement, insbesondere als ein Thyristor, ausgebildet. Bei mehreren in Reihe geschalteten Energieaufnehmern ist hierbei ebenfalls eine einzige in Reihe zu dieser Reihenschaltung geschalteter und somit für sämtliche Energieaufnehmer gemeinsamer Halbleiterschalter ausreichend. Bei mehreren parallel geschalteten Energieaufnehmern kann ein zu dieser Parallelschaltung in Reihe geschalteter gemeinsamer Halbleiterschalter ausreichend sein; es kann aber auch für jeden der Energieaufnehmer jeweils ein eigener Halbleiterschalter vorhanden sein, der in Reihe zu dem Energieaufnehmer geschaltet ist.

Gemäß einer besonders vorteilhaften Ausgestaltung ist die Energieaufnahmeeinrichtung hinsichtlich einer Aufnahme von elektrischer Bremsleistung der Drehstromantriebsmaschine veränderbar ausgebildet. Die Aufnahme von elektrischer Bremsleistung kann dann in Abhängigkeit von der Höhe eines situationsabhängig benötigten Bremsmomentes der Drehstromantriebsmaschine eingestellt werden.

Zur Veränderung der Aufnahme von elektrischer Bremsleistung kann die Energieaufnahmeeinrichtung für zumindest einen Teil der Energieaufnehmer jeweils einen in Reihe oder parallel zu dem jeweiligen Energieaufnehmer geschalteten Schalter umfassen. Die Energieaufnehmer, vorzugsweise mehrere ohmsche Widerstände, können hierdurch zu- und/oder weggeschaltet werden und somit im generatorischen Betrieb der Drehstromantriebsmaschine die Energie- und Leistungsaufnahme und damit das Bremsmoment der Drehstromantriebsmaschine in Stufen variiert werden. Die Energieaufnahmeeinrichtung kann beispielsweise mehrere parallel geschaltete Energieaufnehmer mit jeweils einem in Reihe hierzu geschalteten Schalter oder mehrere in Reihe geschaltete Energieaufnehmer mit jeweils einem hierzu parallel geschalteten Schalter umfassen.

Der oder die Schalter sind bevorzugt als leistungselektronische Halbleiterschalter ausgebildet. Hierbei können abschaltbare oder auch nicht abschaltbare Halbleiterschalter zum Einsatz kommen. Für den Fall, dass der Halbleiterschalter keine Sperrspannung aufnehmen kann, ist diesem bevorzugt eine Diode in Reihe geschaltet, die diese Sperrspannung aufnehmen kann.

Wenn der leistungselektronische Halbleiterschalter als ein rückwärtssperrendes Leistungs-Halbleiterbauelement, insbesondere als ein Thyristor, ausgebildet ist, kann eine in Reihe zu dem zumindest einen Energieaufnehmer geschaltete Diode entfallen, da das rückwärtssperrende Leistungs-Halbleiterbauelement die Funktion der Diode mit übernehmen kann.

Alternativ oder ergänzend kann zur Veränderung der Aufnahme von elektrischer Bremsleistung der Drehstromantriebsmaschine zumindest einer der Energieaufnehmer als ein kontinuierlich veränderbarer ohmscher Widerstand ausgebildet sein. Hierdurch kann die Aufnahme von elektrischer Bremsleistung der Drehstromantriebsmaschine und somit deren Bremsmoment stufenlos variiert werden.

Gemäß einer besonders vorteilhaften Ausgestaltung umfasst das Antriebssystem eine Überwachungs- und Steuerungseinrichtung zur Steuerung und/oder Regelung der Aufnahme von elektrischer Bremsleistung der Drehstromantriebsmaschine durch die Energieaufnahmeeinrichtung in Abhängigkeit eines gewünschten Soll-Bremsmoments der Drehstromantriebsmaschine und in Abhängigkeit von Ist-Werten des Antriebssystems. Bei diesen Ist-Werten kann es sich z.B. um Werte für

- die Polarität der Zwischenkreisspannung und/oder
- die Höhe der Zwischenkreisspannung (und/oder
- den Zwischenkreisstrom und/oder
- die Motordrehzahl und/oder
- die Motorspannung und/oder
- den Motorstroms

handeln.

Die Erfindung ist besonders vorteilhaft einsetzbar, wenn die Drehstromantriebsmaschine eine Leistung im ein- oder mehrstelligen Megawattbereich aufweist.

Die von der Energieaufnahmeeinrichtung aufgenommene Energie kann auch anderweitig genutzt werden, z.B. zur Erwärmung von Raumluft, Heizungs- und Brauchwasser. Zusätzlich oder alternativ kann es sich, insbesondere bei Antrieben im Bereich hoher Leistungen, weiterhin als besonders vorteilhaft erweisen, wenn diese Energie gespeichert werden kann. Dies kann z.B. in elektrischen Energiespeichern (z.B. Kondensatoren), in elektrochemischen Energiespeichern (z.B. Akkumulatoren), in mechanischen Energiespeichern (Schwungradspeichern) oder in thermischen Speichern (z.B. Warmwasserspeicher) erfolgen. Der zumindest eine Energieaufnehmer kann deshalb anstatt als ein ohmscher Widerstand auch als ein Energiespeicher, insbesondere als eine Hochleistungs-Kondensatorbatterie oder eine elektrochemische Batterie (Akkumulator) oder als ein Schwungradspeicher, ausgebildet sein.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:

FIG 1    ein erstes aus dem Stand der Technik bekanntes Antriebssystem,
FIG 2    ein zweites aus dem Stand der Technik bekanntes Antriebssystem,
FIG 3    ein Drehzahl-Drehmomenten-Diagramm für die vier Drehzahl-Drehmomentenquadranten eines Schiffsantriebs in vereinfachter Form,
FIG 4    das Antriebssystem von FIG 2 mit einer Darstellung der Zwischenkreisspannung bei motorischem und generatorischem Betrieb,
FIG 5    eine erste Ausführungsform eines erfindungsgemäßen Antriebssystems,
FIG 6    eine zweite Ausführungsform eines erfindungsgemäßen Antriebssystems,
FIG 7    eine dritte Ausführungsform eines erfindungsgemäßen Antriebssystems,
FIG 8    eine vierte Ausführungsform eines erfindungsgemäßen Antriebssystems,
FIG 9    eine fünfte Ausführungsform eines erfindungsgemäßen Antriebssystems,
FIG 10   eine sechste Ausführungsform eines erfindungsgemäßen Antriebssystems und
FIG 11   eine siebente Ausführungsform eines erfindungsgemäßen Antriebssystems.

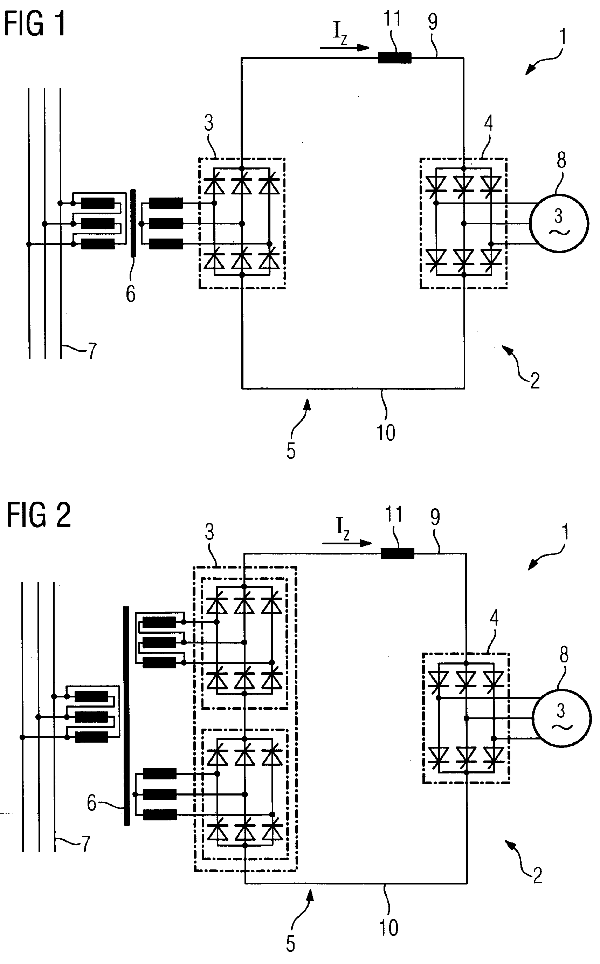

Ein FIG 1 gezeigtes und aus dem Stand der Technik bekanntes Antriebssystem 1 für ein Schiff umfasst einen Gleichstromzwischenkreis-Umrichter 2, der wiederum einen netzseitigen Stromrichter 3 und einen maschinenseitigen Stromrichter 4 umfasst. Der netzseitige Stromrichter 3 ist eingangsseitig über einen Transformator 6 mit einem Wechselspannungsnetz 7 und ausgangsseitig mit dem Gleichstromzwischenkreis 5 verbunden. Der motorseitige Stromrichter 4 ist eingangsseitig mit dem Gleichstromzwischenkreis 5 und ausgangsseitig mit einer Drehstromantriebsmaschine 8 verbunden. Die Stromrichter 3 und 4 umfassen jeweils eine Anzahl von Stromrichterventilen, die als leistungselektronische Halbleiterschalter ausgebildet sind.

Der Gleichstromzwischenkreis 5 umfasst zwei Leiter 9, 10 wobei in den Leiter 9 eine Gleichstromglättungsdrossel 11 geschaltet ist, die als Energiespeicher für den Zwischenkreisstrom $I_Z$ dient, so dass im Idealfall (unendlich große Induktivität der Drossel 11) ein ideal geglätteter, konstanter Zwischenkreisstrom $I_z$ fließt. Die Stromrichtung des Zwischenkreisstroms $I_z$ kann sich hierbei prinzipbedingt nicht umkehren, da sie durch die Halbleiterschalter, bei denen es sich üblicherweise um Thyristoren handelt, in den netz- und maschinenseitigen Stromrichtern 3 und 4 fest vorgegeben ist.

Wie in Figur 2 gezeigt, wird der netzseitige Stromrichter 3 für größere Leistungen oft 12-pulsig (oder auch noch höher pulsig) ausgeführt, um geringe Oberschwingungs-Netzrückwirkungen zu erhalten. Der maschinenseitige Stromrichter 4 wird meist nur 6-pulsig ausgeführt. Für sehr große Leistungen und/oder wenn Redundanzanforderungen gestellt werden, kann außerdem durch Verwendung von mehreren Umrichtern die Speisung von Maschinen mit mehreren, dreiphasigen Wicklungssystemen erfolgen (nicht dargestellt).

Die Regelung und Ansteuerung der beiden Stromrichter 3, 4 erfolgt üblicherweise mittels einer sog. "stromrichternahen Steuerung- und Regelung" in Abhängigkeit des vorgegebenen Motor-Sollmoments. Die Vorgabe des Solldrehmoments erfolgt i.d.R. durch eine überlagerte Drehzahlregelung. Die erforderlichen  Steuer- und Regelungskomponenten sind in den Figuren nicht mit dargestellt.

Bei der Drehfeldmaschine handelt es sich beispielsweise um eine Synchronmaschine mit einer Leistung im ein- oder zweistelligen Megawattbereich, die als Propulsions-Hauptantrieb eines Schiffes genutzt wird.

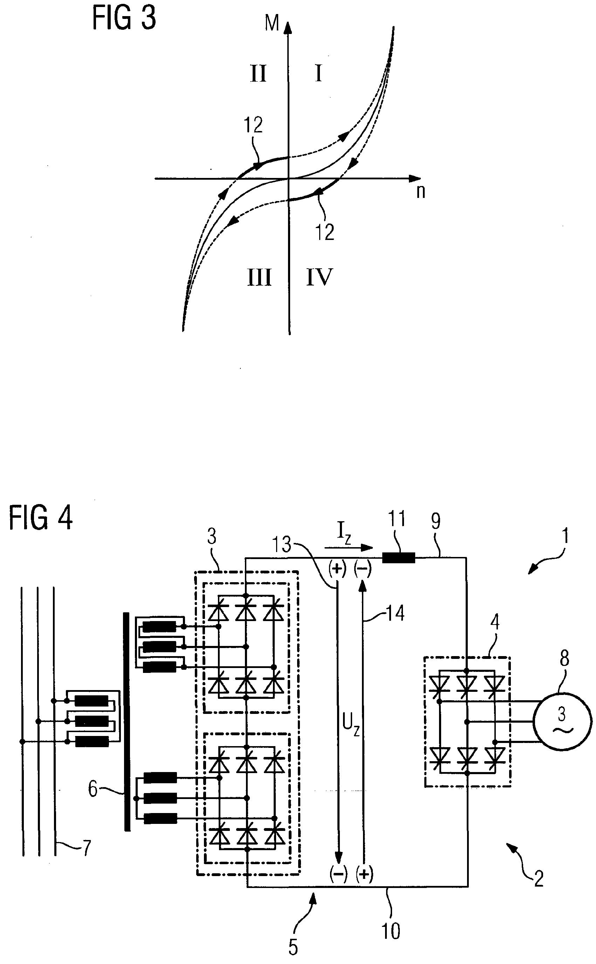

Für die vorstehend erläuterte Anwendung als Schiffsantrieb lassen sich die vier Quadranten des Drehzahl-Drehmomenten-Diagramms in stark vereinfachter Form wie in Figur 3 gezeigt darstellen (vereinfachte Darstellung der sog. "Robinson-Kurven"). Insbesondere dann, wenn Propeller mit feststehenden Flügeln ("Festpropeller") eingesetzt werden, ist der generatorische Betrieb in den Quadranten IV bzw. II unverzichtbar, um den Propeller abbremsen und die Propellerdrehrichtung umkehren zu können. Grund dafür ist, dass das sich bewegende Schiff eine sog. "durchziehende Last" durch strömendes Wasser darstellt. Die entsprechenden Kurvenabschnitte sind in Bild 3 mit durchgezogener Linie dargestellt und mit dem Bezugszeichen 12 versehen.

FIG 4 zeigt für den Fall des Antriebssystems von FIG 2 die unterschiedliche Polarität der Zwischenkreisspannung $U_z$ für den motorischen und für den generatorischen Betrieb der Drehstrommaschine 8. Dabei verdeutlich der mit dem Bezugszeichen 13 bezeichnete Pfeil die Polarität der Zwischenkreisspannung $U_z$ im motorischen Betrieb und der umgekehrt gerichtete, mit dem Bezugszeichen 14 bezeichnete Pfeil die Polarität der Zwischenkreisspannung $U_z$ im generatorischen Betrieb.

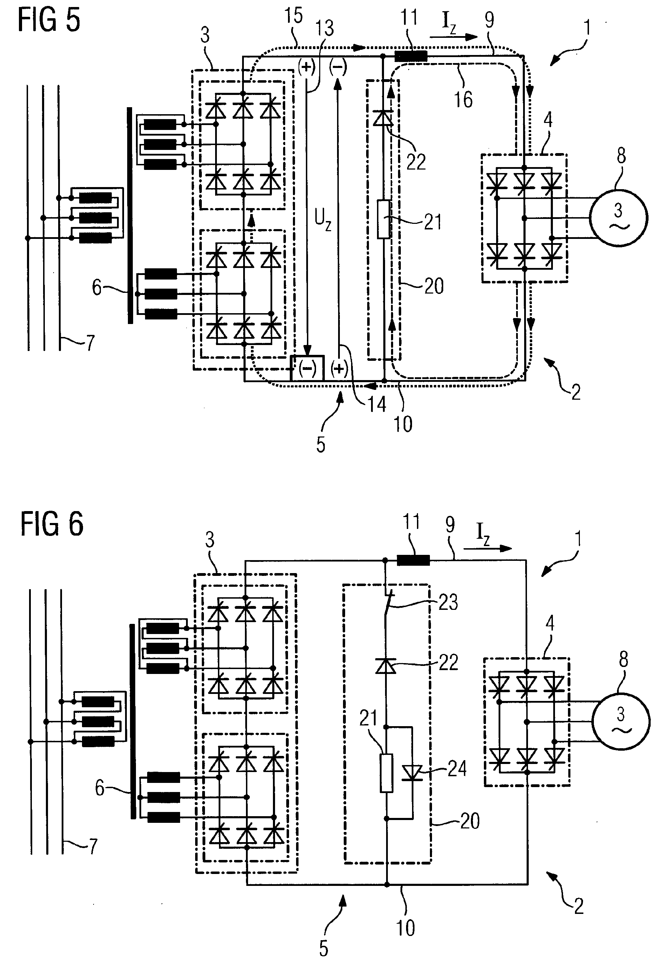

Ein in FIG 5 gezeigtes erfindungsgemäßes Antriebssystem 1 weist die gleichen Komponenten wie das in FIG 2 gezeigte Antriebssystem und zusätzliche eine in dem Gleichstromzwischenkreis 5 angeordnete Energieaufnahmeeinrichtung 20 auf. Die Energieaufnahmeeinrichtung 20 ist hierzu zwischen die beiden Leiter 9, 10 des Gleichstromzwischenkreises 5 geschaltet. Die Energieaufnahmeeinrichtung 20 umfasst einen elektrischen Widerstand  21 als Energieaufnehmer zur Aufnahme der elektrischen Energie, die die Drehstromantriebsmaschine 8 im generatorischen Betrieb erzeugt und über den motorseitigen Stromrichter 4 an den Zwischenkreis 5 abgibt. Die Energieaufnahmeeinrichtung 20 kann natürlich als Energieaufnehmer statt nur eines einzigen Widerstandes 21 auch mehrere in Reihe und/oder parallel geschaltete Widerstände oder auch Energiespeicher umfassen.

In dem in FIG 5 dargestellten Fall ist der elektrische Widerstand 21 derart ausgelegt, dass durch ihn die gesamte Energie aufnehmbar ist, die die Drehstromantriebsmaschine 8 bei einem Bremsvorgang des Schiffes im generatorischen Betrieb erzeugt.

Die Energieaufnahmeeinrichtung 20 umfasst weiterhin eine in Reihe zu dem Widerstand 21 geschaltet Diode 22, die derart gepolt ist, dass sie bei einer im generatorischen Betrieb vorliegenden Polarität der Zwischenkreisspannung $U_z$, die durch den Pfeil 14 veranschaulicht ist, leitend ist und bei einer im motorischen Betrieb vorliegenden Polarität der Zwischenkreisspannung $U_z$, die durch den Pfeil 13 veranschaulicht ist, sperrt. Ein Strom kann durch den Widerstand 21 nur dann fließen, wenn die Diode 22 leitend ist, d.h. eine dem Bremsbetrieb (generatorischen Betrieb) entsprechende Zwischenkreisspannung $U_z$ anliegt. In FIG 5 ist das dann der Fall, wenn der Leiter 9 negatives Potential und der Leiter 10 positives Potential aufweist. Dabei ist in FIG 5 für den motorischen Betrieb die Richtung des Zwischenkreisstromes $I_z$, d.h. des Antriebsstromes, mit einer mit 15 bezeichneten punktiert dargestellten Linie und für den generatorischen Betrieb die Richtung des Zwischenkreisstromes $I_z$, d.h. des Bremsstromes, mit einer mit 16 bezeichneten gestrichelt dargestellten Linie gezeigt.

Der netzseitige Stromrichter 3 kann im Bremsbetrieb in einen inaktiven Zustand gebracht werden, in dem die Zündimpulse für die Ventile dieses Stromrichters gesperrt werden, so dass  keine Rückleistung aus dem Zwischenkreis 5 über den Stromrichter 3 in das Netz 7 fließen kann.

Bei einem in FIG 6 gezeigten Antriebssystem 1 umfasst die Energieaufnahmeeinrichtung 20 zusätzlich einen zu dem Widerstand 21 und der Diode 22 geschalteten Schalter 23, so dass die Funktion "Bremsen mit Bremswiderstand" im Bedarfsfall zuoder weggeschaltet werden kann. Es empfiehlt sich dann auch, parallel zum Widerstand 21 eine sog. Freilaufdiode 24 zu schalten, damit die in der parasitären Induktivität des Widerstands 21 (und ggf. seiner elektrischen Anschlussleitungen) gespeicherte Energie nicht zu unzulässig hohen Belastungen des Schalters 23 beim Abschalten eines Bremsstromes führt.

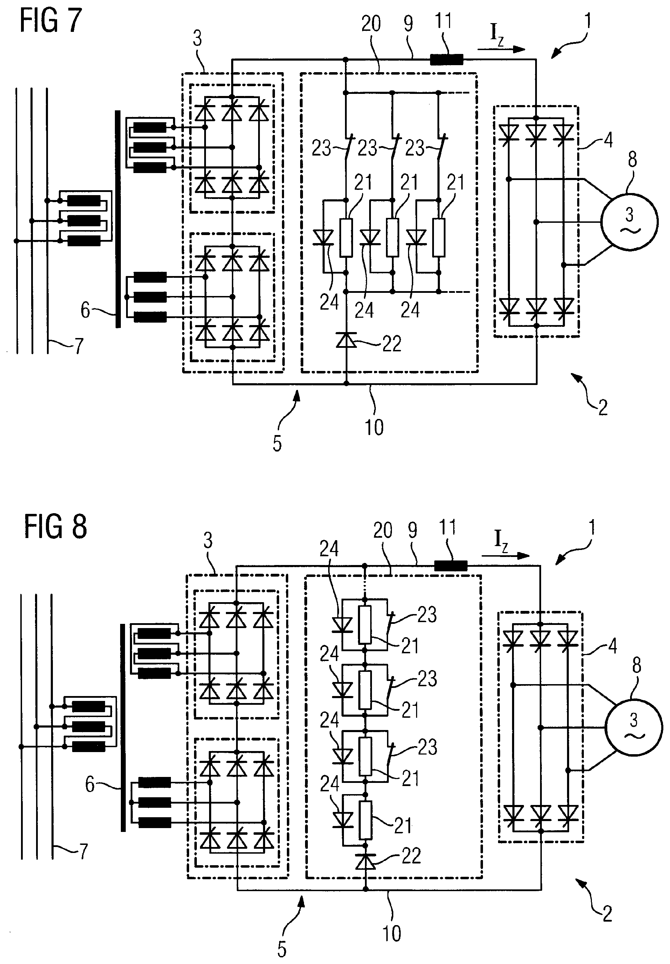

Bei einem in FIG 7 gezeigten Antriebssystem 1 umfasst die Energieaufnahmeeinrichtung 20 mehrere parallel zueinander geschaltete ohmsche Widerstände 21 mit jeweils einem in Reihe dazu geschalteten Schalter 23. Zusätzlich ist jedem der Widerstände 21 jeweils eine Freilaufdiode 24 parallel geschaltet. Im generatorischen Betrieb der Drehstromantriebsmaschine 8 kann somit durch Zu- oder Wegschalten von Widerständen 21 die Aufnahme von Bremsleistung in Stufen verändert und somit an das situationsabhängig benötigte Bremsmoment angepasst werden. Ein Vorteil dieser Lösung ist, dass der jeweils wirksame Bremswiderstand der tatsächlichen Motordrehzahl angepasst werden kann. Mit einem unveränderlichen Bremswiderstand würde andernfalls die beim Bremsen im Motor induzierte, mit sinkender Drehzahl abnehmende Motorspannung einen ebenfalls sinkenden Bremsstrom und damit ein kleiner werdendes Bremsmoment bewirken.

Wie in FIG 8 dargestellt ist, kann die Energieaufnahmeeinrichtung 20 auch mehrere in Reihe geschaltete Widerstände 21 umfassen, wobei mehrere oder alle davon jeweils einen hierzu parallel geschalteten Schalter 23 zur Überbrückung des Widerstandes 21 umfassen. Zusätzlich ist zu jedem der Widerstände 21 jeweils eine Freilaufdiode 24 parallel geschaltet. Durch Öffnen und Schließen der Schalter 23 können dann einzelne oder mehrere Widerstände 21 überbrückt werden, so dass sich die Aufnahme von Bremsleistung ebenfalls in Abhängigkeit von dem benötigten Bremsmoment steuern und/oder regeln lässt.

Die in FIG 7 bzw. 8 dargestellten Möglichkeiten zur Veränderung bzw. Steuerung des wirksamen Bremswiderstands und somit der Aufnahme von Bremsleistung der Drehstromantriebsmaschine 8 können alternativ oder in Kombination miteinander verwendet werden (nicht dargestellt).

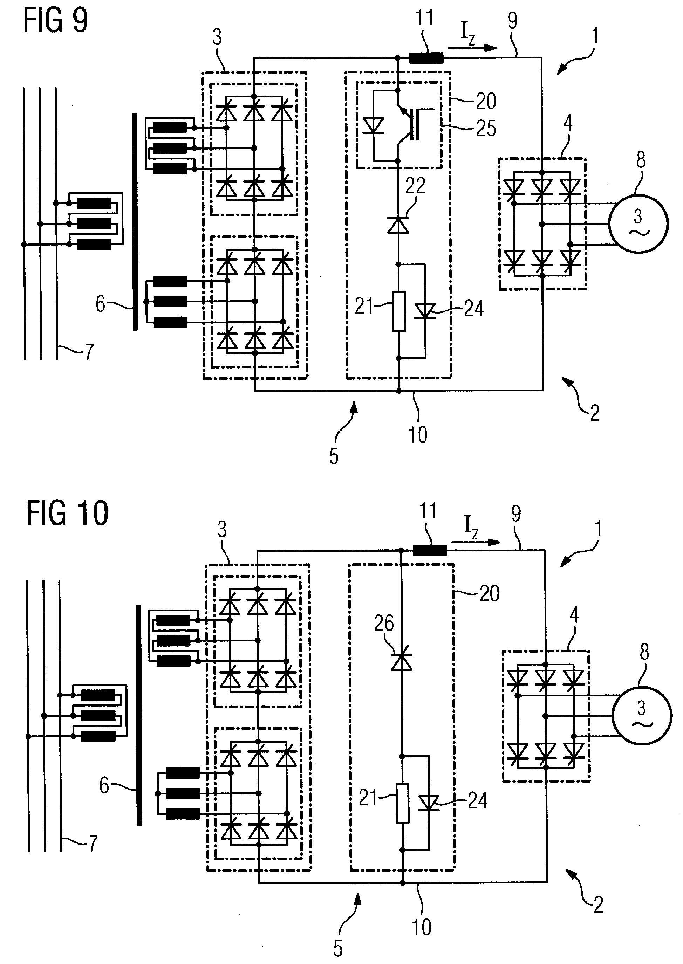

Der oder die Schalter 23 können als abschaltbare oder nicht abschaltbare leistungselektronische Halbleiterschalter (im Folgenden als "Leistungs-Halbleiterschalter" bezeichnet) ausgebildet sein. FIG 9 zeigt hierzu für den Fall des Ausführungsbeispiels von FIG 6 eine Ausbildung des Schalters 23 in vorteilhafter Weise als ein steuerbarer, abschaltbarer Leistungs-Halbleiterschalter 25 in Form eines IGBT.

Wenn für den Leistungs-Halbleiterschalter ein rückwärtssperrender Leistungs-Halbleiterschalter zum Einsatz kommt, kann auch eine in Reihe zu dem Widerstand geschaltete Diode zur Aktivierung der Energieaufnahme entfallen. FIG 10 zeigt hierzu für den Fall des Ausführungsbeispiels von FIG 6, dass statt der Diode 22 ein in Reihe zu dem Widerstand 21 geschalteter steuerbarer, rückwärtssperrender Leistungs-Halbleiterschalter zum Einsatz kommt, der in FIG 10 in Form eines Thyristors 26 dargestellt ist.

Ein rückwärtssperrender Leistungs-Halbleiterschalter ist deshalb sehr gut für diese Verwendung geeignet, da er sowohl eine Sperrspannung wie auch eine Blockierspannung aufnehmen kann, d.h. ein solcher Leistungs-Halbleiterschalter 26 kann die Funktion der Diode 22, wie sie z.B. in den FIG 6 und FIG 7 dargestellt ist, mit übernehmen.

Der rückwärtssperrende Leistungs-Halbleiterschalter, in FIG 10 der Thyristor 26, ist derart gepolt, dass er bei einer im generatorischen Betrieb vorliegenden Polarität der Zwischenkreisspannung in einen leitenden Zustand schaltbar ist und bei einer im motorischen Betrieb vorliegenden Polarität der Zwischenkreisspannung $U_z$ sperrt.

Da Thyristoren keine abschaltbaren leistungselektronischen Bauelemente sind, fließt nach einmaliger Ansteuerung ("Zünden") des Thyristors 26 solange ein Bremsstrom durch den jeweiligen Widerstand 21, bis der Nulldurchgang des Stromes erreicht ist. Das ist dann der Fall, wenn die anfallende Bremsenergie im Widerstand 21 praktisch vollständig abgebaut ist oder der Umrichter 2 wieder in den motorischen Betrieb gebracht wird, so das der Thyristor 26 bei der sich dabei einstellenden Zwischenkreisspannung $U_z$ wieder sperrt.

Die Verwendung von steuerbaren, abschaltbaren Leistungs-Halbleiterschaltern (z.B. IGBT's, IGCT's) und von steuerbaren, nicht abschaltbaren Leistungs-Halbleiterschaltern (z.B. Thyristoren) für die Schalter 23 kann alternativ oder in Kombination miteinander erfolgen (nicht dargestellt).

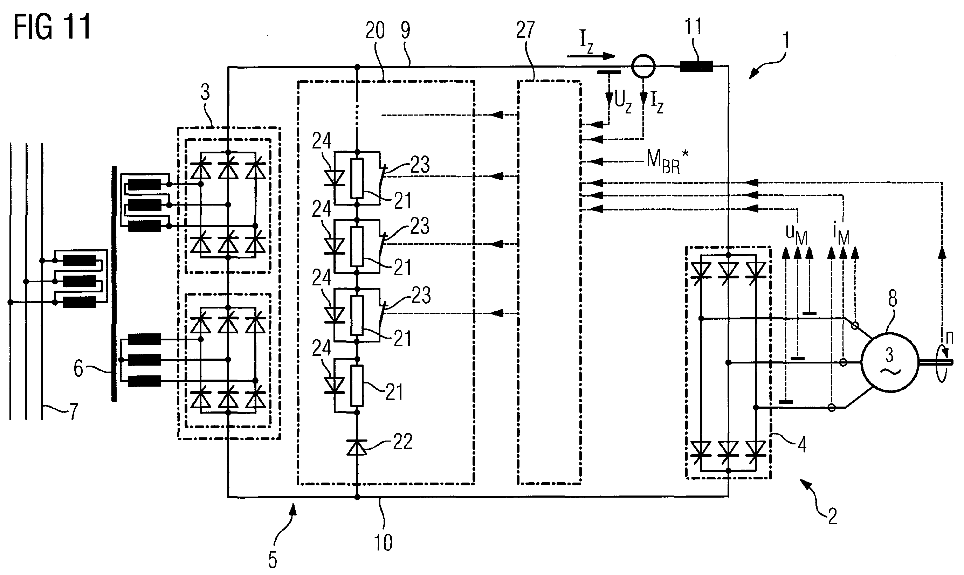

Wie in FIG 11 dargestellt ist, ist es weiterhin von besonderem Vorteil, wenn das Antriebssystem eine Überwachungs- und Steuerungseinrichtung 27 umfasst, die derart eingerichtet ist, dass sie die Aufnahme von elektrischer Bremsleistung der Drehstromantriebsmaschine 8 durch die Energieaufnahmeeinrichtung 20 in Abhängigkeit eines gewünschten Soll-Bremsmoments $M_{Br}^*$ der Drehstromantriebsmaschine 8 und in Abhängigkeit von Ist-Werten des Antriebssystems 1 steuert und/oder regelt. Die Überwachungs- und Steuerungseinrichtung 27 erfasst und wertet hierzu die Polarität der Zwischenkreisspannung $U_z$ und/oder die Höhe der Zwischenkreisspannung $U_z$ und/oder den Zwischenkreisstrom $I_z$ und/oder die Motordrehzahl n und/oder die Motorspannung UM aus und generiert daraus Ansteuersignale für die Schalter 23, so dass eine bedarfsgerechte und/oder vom Arbeitspunkt des Antriebsystems 1 abhängige Änderung bzw. Anpassung der jeweils wirksamen Bremsleistung, z.B. durch Zuund/oder Wegschalten von Bremswiderständen 21 (wie im Zusammenhang mit FIG 7 und FIG 8 erläutert), erfolgen kann.

Für die Schalter 23 ist es dann von besonderem Vorteil, wenn dafür abschaltbare oder nicht abschaltbare Leistungs-Halbleiterschalter verwendet werden, wie sie beispielhaft bereits in den Figuren FIG 9 und 10 dargestellt wurden.

Die Energieaufnahmeeinrichtung 20 kann neben der dargestellten stufigen Veränderung der Aufnahme von Bremsleistung auch stufenlos ausgeführt werden, in dem als Energieaufnehmer stufenlos veränderbare Energieaufnehmer, z.B. stufenlos veränderbare ohmsche Widerstände, verwendet werden.

**Patentansprüche**

1. Antriebssystem (1) für eine Anlage mit einem Wechselspannungsinselnetz (7), insbesondere für ein Schiff oder eine Offshore-Plattform, mit

   - einer Drehstromantriebsmaschine (8), die sowohl motorisch als auch generatorisch betreibbar ist,
   - einem Umrichter (2) mit einem Gleichstromzwischenkreis (5) mit einer Zwischenkreisspannung ($U_z$),
   - wobei der Umrichter (2) einen netzseitigen Stromrichter (3) und einen maschinenseitigen Stromrichter (4) umfasst, wobei der netzseitige Stromrichter (3) eingangsseitig mit dem Wechselspannungsinselnetz (7) verbindbar ist und ausgangsseitig mit dem Gleichstromzwischenkreis (5) verbunden ist und der motorseitige Stromrichter (4) eingangsseitig mit dem Gleichstromzwischenkreis (5) und ausgangsseitig mit der Drehstromantriebsmaschine (8) verbunden ist,
   - wobei die Drehstromantriebsmaschine (8) im motorischen Betrieb über den Umrichter (2) elektrische Energie aus dem Wechselspannungsinselnetz (7) aufnimmt und im generatorischen Betrieb elektrische Energie erzeugt und über den motorseitigen Stromrichter (4) an den Zwischenkreis (5) abgibt,
   - und mit einer in dem Zwischenkreis (5) angeordneten Energieaufnahmeeinrichtung (20) mit zumindest einem Energieaufnehmer (21), der vorzugsweise aus zumindest einem ohmschen Widerstand besteht, zur Aufnahme zumindest eines Teils der elektrischen Energie, die die Drehstromantriebsmaschine (8) im generatorischen Betrieb erzeugt und über den motorseitigen Stromrichter (4) an den Zwischenkreis (5) abgibt,
   **dadurch gekennzeichnet, dass**
   - die Energieaufnahmeeinrichtung (20) mehrere Energieaufnehmer (21) und zu deren Aktivierung eine in Reihe zu den Energieaufnehmern (21) geschaltete Diode (22) umfasst, die derart gepolt ist, dass sie bei einer im generatorischen Betrieb vorliegenden Polarität der Zwischenkreisspannung ($U_z$) leitend ist und bei einer im motorischen Betrieb vorliegenden Polarität der Zwischenkreisspannung ($U_z$) sperrt,
   - und dass die Energieaufnahmeeinrichtung (20) hinsichtlich einer Aufnahme von elektrischer Bremsleistung der Drehstromantriebsmaschine (8) veränderbar ausgebildet ist, wobei die Energieaufnahmeeinrichtung (20) zur Veränderung der Aufnahme von elektrischer Bremsleistung der Drehstromantriebsmaschine (8) für zumindest einen Teil der Energieaufnehmer (21) jeweils einen in Reihe oder parallel zu dem jeweiligen Energieaufnehmer (21) geschalteten Schalter (23) umfasst und zumindest ein Energieaufnehmer (21) als ein Energiespeicher, insbesondere als eine HochleistungsKondensatorbatterie oder eine elektrochemische Batterie, z.B. Akkumulator, oder ein Schwungradspeicher, ausgebildet ist.

2. Antriebssystem (1) nach Anspruch 1, **dadurch gekennzeichnet, dass** der oder die Schalter (23) als leistungselektronische Halbleiterschalter ausgebildet sind.

3. Antriebssystem (1) nach einem der vorhergehenden Ansprüche, **dadurch gekennzeichnet, dass** zur Veränderung der Aufnahme von elektrischer Bremsleistung der Drehstromantriebsmaschine (8) zumindest einer der Energieaufnehmer (21) als ein kontinuierlich veränderbarer ohmscher Widerstand ausgebildet ist.

4. Antriebssystem (1) nach einem der vorhergehenden Ansprüche, **gekennzeichnet durch** eine Überwachungs- und Steuerungseinrichtung (27) zur Steuerung und/oder Regelung der Aufnahme von Bremsleistung der Drehstromantriebsmaschine (8) **durch** die Energieaufnahmeeinrichtung (20) in Abhängigkeit eines gewünschten Soll-Bremsmoments ($M_{Br}$*) der Drehstromantriebsmaschine (8) und in Abhängigkeit von Ist-Werten des Antriebssystems (1).

5. Antriebssystem (1) nach einem der vorhergehenden Ansprüche, **dadurch gekennzeichnet, dass** die Drehstromantriebsmaschine (8) eine Leistung im ein- oder mehrstelligen Megawattbereich aufweist.

**Claims**

1. Drive system (1) for a facility having an alternating-current isolated network (7), in particular for a ship or an offshore platform, comprising

   - a three-phase drive machine (8) which can be operated both as a motor and as a generator,
   - a converter (2) having a direct-current intermediate circuit (5) having an intermediate circuit voltage ($U_z$),
   - the converter (2) comprising a network-side current converter (3) and a machine-side current converter (4),

EP 2 419 295 B1

the network-side current converter (3) being connectable on the input side to the alternating-current isolated network (7) and being connected on the output side to the direct-current intermediate circuit (5), and the motor-side current converter (4) being connected on the input side to the direct-current intermediate circuit (5) and on the output side to the three-phase drive machine (8),

- the three-phase drive machine (8) drawing electrical energy from the alternating-current isolated network (7) in motor operation via the converter (2) and generating electrical energy in generator operation and outputting said electrical energy to the intermediate circuit (5) via the motor-side current converter (4),

- and with an energy absorbing device (20) arranged in the intermediate circuit (5) and comprising at least one energy absorber (21) which preferably consists of at least one ohmic resistor, for absorbing at least a part of the electrical energy which the three-phase drive machine (8) generates in generator operation and outputs via the motor-side current converter (4) to the intermediate circuit (5),

**characterised in that**

- the energy absorbing device (20) includes a plurality of energy absorbers (21) and for their activation a diode (22) which is connected in series with the energy absorbers (21) and is polarised in such a way that it is conductive with a polarity of the intermediate circuit voltage ($U_z$) present during generator operation and blocks with a polarity of the intermediate circuit voltage ($U_z$) present during motor operation,

- and that the energy absorbing device (20) is configured to be variable with regard to an absorption of electrical braking power of the three-phase drive machine (8) wherein in order to vary the absorption of electrical braking power of the three-phase drive machine (8), the energy absorbing device (20) includes for at least some of the energy absorbers (21) a respective switch (23) connected in series or in parallel with the respective energy absorber (21) and at least one energy absorber (21) in the form of an energy store, in particular a high-power capacitor battery or an electrochemical battery, e.g. accumulator or a flywheel storage device.

2. Drive system (1) according to claim 1, **characterised in that** the switch or switches (23) are in the form of power electronic semiconductor switches.

3. Drive system (1) according to any one of the preceding claims,
**characterised in that**, in order to vary the absorption of electrical braking power of the three-phase drive machine (8), at least one of the energy absorbers is in the form of a continuously variable ohmic resistor.

4. Drive system (1) according to any one of the preceding claims,
**characterised by** a monitoring and control device (27) for controlling and/or regulating the absorption of braking power of the three-phase drive machine (8) by the energy absorbing device (20) as a function of a desired reference braking torque ($M_{Br}$*) of the three-phase drive machine (8) and as a function of actual values of the drive system (1).

5. Drive system (1) according to any one of the preceding claims, **characterised in that** the three-phase drive machine (8) has a power in the single-digit or multi-digit megawatt range.


**Revendications**

1. Système ( 1 ) d'entraînement pour une installation ayant un réseau ( 7 ) de tension alternative en îlot, notamment pour un bateau ou une plate-forme en mer, comprenant

- un moteur ( 8 ) d'entraînement à courant triphasé, qui peut fonctionner tant en moteur qu'en génératrice,
- un convertisseur ( 2 ) ayant un circuit ( 5 ) intermédiaire en courant continu ayant une tension ( $U_z$ ) de circuit intermédiaire,
- dans lequel le convertisseur ( 2 ) comprend un convertisseur ( 3 ) de courant du côté du réseau et un convertisseur ( 4 ) de courant du côté du moteur, le convertisseur ( 3 ) de courant du côté du réseau pouvant être relié du côté de l'entrée au réseau ( 7 ) de tension alternative en îlot et étant relié du côté de la sortie au circuit ( 5 ) intermédiaire de courant continu et le convertisseur ( 4 ) du côté du moteur est relié du côté de l'entrée au circuit ( 5 ) intermédiaire de courant continu et du côté de la sortie au moteur ( 8 ) d'entraînement à courant triphasé,
- dans lequel le moteur ( 8 ) d'entraînement à courant triphasé absorbe en fonctionnement en moteur par l'intermédiaire du convertisseur ( 2 ) de l'énergie électrique provenant du réseau ( 7 ) de tension alternative en îlot et produit en fonction en génératrice de l'énergie électrique et la cède au circuit ( 5 ) intermédiaire par l'intermédiaire du convertisseur ( 4 ) de courant du côté du moteur,
- et comprenant un dispositif ( 20 ) d'absorption d'énergie monté dans le circuit ( 5 ) intermédiaire et ayant au moins un absorbeur ( 21 ) d'énergie constitué de préférence d'au moins une résistance ohmique pour l'absorption d'au moins une partie de l'énergie électrique que le moteur ( 8 ) d'entraînement à courant triphasé produit en fonctionnement en génératrice et cède au circuit ( 5 ) intermédiaire par l'intermédiaire du convertisseur ( 4 ) de courant du côté du moteur,
**caractérisé en ce que**
- le dispositif ( 20 ) d'absorption d'énergie comprend plusieurs absorbeurs ( 21 ) d'énergie et, pour leur activation, une diode ( 22 ) qui est montée en série avec les absorbeurs ( 21 ) d'énergie et qui est polarisée de manière à être conductrice pour une polarité de la tension ( $U_z$ ) de circuit intermédiaire présente dans le fonctionnement en génératrice et qui est bloquée pour une polarité de la tension ( $U_z$ ) du circuit intermédiaire présente dans le fonctionnement en moteur.
- et **en ce que** le dispositif ( 20 ) d'absorption d'énergie est constitué de manière variable en ce qui concerne une absorption de la puissance électrique de freinage du moteur ( 8 ) d'entraînement à courant triphasé, le dispositif ( 20 ) d'absorption d'énergie comprenant, pour la variation de l'absorption de la puissance électrique de freinage du moteur ( 8 ) d'entraînement à courant triphasé pour au moins une partie des absorbeurs ( 21 ) d'énergie, respectivement un commutateur ( 23 ) monté en série ou en parallèle à l'absorbeur ( 21 ) d'énergie respectif et au moins un absorbeur ( 21 ) d'énergie est constitué en accumulateur d'énergie, notamment sous la forme d'une batterie de condensateurs de grande puissance ou d'une batterie électrochimique, par exemple d'un accumulateur, ou d'un accumulateur à volant.

2. Système ( 1 ) d'entraînement suivant la revendication 1, **caractérisé en ce que** le commutateur ( 23 ) ou les commutateurs ( 23 ) sont constitués sous la forme de commutateurs électroniques de puissance à semi-conducteurs.

3. Système ( 1 ) d'entraînement suivant l'une des revendications précédentes, **caractérisé en ce que**, pour faire varier l'absorption de la puissance électrique de freinage du moteur ( 8 ) d'entraînement à courant triphasé, au moins l'un des absorbeurs ( 21 ) d'énergie est constitué sous la forme d'une résistance ohmique pouvant être modifiée en continu.

4. Système ( 1 ) d'entraînement suivant l'une des revendications précédentes, **caractérisé par** un dispositif ( 27 ) de contrôle et de commande pour la commande et/ou la régulation de l'absorption de la puissance de freinage du moteur ( 8 ) d'entraînement à courant triphasé par le dispositif ( 20 ) d'absorption d'énergie, en fonction d'un couple ($M_{Br}^*$) de freinage de consigne souhaité du moteur ( 8 ) d'entraînement à courant triphasé et en fonction de valeurs réelles du système ( 1 ) d'entraînement.

5. Système ( 1 ) d'entraînement suivant l'une des revendications précédentes, **caractérisé en ce que** le moteur ( 8 ) d'entraînement à courant triphasé a une puissance dans la plage de mégawatt à un chiffre ou à plusieurs chiffres.

FIG 1

FIG 2

FIG 3

FIG 4

## FIG 5

## FIG 6

FIG 7

FIG 8

FIG 9

FIG 10

FIG 11

EP 2 419 295 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 07022773 A
- DE 749817 A
- DE 870725 A
- DE 2237233 A1